# EUROPEAN PATENT APPLICATION

(11) **EP 3 923 121 A1**
(43) Date of publication of application: **15.12.2021**
(21) Application number: 20020270.3
(22) Date of filing: 09.06.2020
(51) Int. Cl.: G06F 3/01

(54) **OBJECT RECOGNITION METHOD AND SYSTEM IN AUGMENTED REALITY ENVIROMENTS**

(71) Applicant: Diadrasis Ladas I & Co Ike, 104 33 Athens (GR)
(72) Inventor: The designation of the inventor has not yet been filed

(57) **Abstract**

A method and system identifying a real-world object in a scene viewed by a camera of a mobile device by employing a 3d scaled digital representation of the scene and tracking a corresponding virtual object in this virtual scene. In relation to the identified object, the method and system then provide multimedia content in an augmented reality environment.

## Description

### Technical Field

The present invention relates to systems and methods suitable for creating and delivering augmented reality (AR) content. In particular the present invention relates to a system and method to recognize real world physical objects through a mobile devise and accordingly provide relevant multimedia content.

### Background

Augmented Reality (AR) effects are computer-generated digital objects like images, 3d models and animation, that are superimposed or integrated into a user's view of a real-world scene, as seen through a mobile device. Certain AR effects may be configured to be placed with objects in the real world. For example, a computer-generated object may be visually placed on a real-world table. The augmented effect may be presented in a variety of ways. For example, the real-world table may be captured by the camera of a mobile smart phone and displayed in real-time through the device's display. In addition to displaying the table, the computing device may also display the virtual object, integrating it with the video of the table that is being displayed. As another example, a user may be viewing the real-world through AR glasses or viewing optics. Like regular glasses, the AR glasses may have one or more lenses that are translucent so that the user may see real-world objects through the lenses. A computer-generated virtual object may be projected onto the lenses so that the virtual object is seen along with any real-world object that is visible through the lenses.

A mobile computing device, such as a smartphone, AR glasses or headset, tablet computer, or laptop computer, may include functionality for determining its location, direction, or orientation, such as a GPS receiver, compass, gyroscope, or accelerometer. Such a device may also include functionality for wireless communication, such as a wireless local area networks (WLANs), a cellular telephone network, a Bluetooth or infrared (IR) communication. Such a device may also include one or more cameras, scanners, touch screens, microphones, or speakers. Mobile computing devices may also execute software applications, such as games, web browsers, or social-networking applications. With social-networking applications, users may connect, communicate, and share information with other users in their social networks.

The main types of augmented reality are marker-based, location-based, and superimposition-based. Marker-based AR is when markers, in the form of images have to be placed in the real world and detected by the application. Virtual object are rendered on top of these markers. An example would be a picture in a magazine which, when pointing a camera at it, the application renders a 3D object on top

Location-based AR is when the content on the users screen presents content depending on the location of the user as determined by the GPS signal. An example of where this could be useful is in a museum where deferent information could be given to the user depending on which room he or she is in.

Superimposition-based AR uses object recognition in order to enhance that object with some sort of visual information. It replaces the real object with an enhanced virtual one. It could be used in retail to display different patterns on a piece of clothing.

Common to all above mentioned methods, in order to be able to present augmented reality content through a mobile device is the recognition and identification of a real word object.

Some early identification methods include object tagging with a visual marker, by attaching a specific and easy recognizable image, like a QR code or a transmitter like an infrared dongle that could be easily registered by a mobile device.

The more sophisticated techniques to identify an object, is the process of matching images caught from a camera with a set of predefined reference images of the object. Because both images are byte arrays, searching for similar elements between the reference image and the image presented is a time and resource consuming task. Different methods to improve the recognition process are employed like analyzing both images while searching for specific feature points, like high-contrast spots, curves, or edges that will not be significantly changed while and trying to match these features instead of the whole image.

### Problem to be addressed

All above mentioned object recognition methods are particularly resource demanding and time consuming as a great number of comparisons between digital objects like images have to be performed. End even if the results of 2d image recognition processes are nowadays considered very accurate, this not the case with the recognition of 3d objects end especially those ones with big dimensions, like buildings or monuments in a urban area, that cannot be easily scanned in order to develop the necessary set of reference images.

Besides, even the simplest methods, as for example the tagging of the physical object with a QR marker or an infrared transmitter in order to be implemented require to interfere with the physical object, something that is not always possible or welcome, as for example in an archaeological site.

All the above methods also require a person to visit the real world object either for tagging or for photographing it.

### Brief Description

The herein proposed solution refers to an alternative recognition method that uses geometrical approach with the employment of a 3d scaled model which acts as a digital simplified representation of the real world.

Instead of executing calculations in the real word with the real objects, the problem is solved in the 3d model reconstruction of the real word and the identification occur on the virtual objects that represents the real word objects. The mobile device transfers the information concerning its current position and rotation to a computing system that executes all the necessary calculations in the digital representation of the scene.

In one specific embodiment of the present method, ray-casting, a well known and easy to implement technique in 3d applications like games is employed.

Raycast casts an imaginary ray from the origin in the desired direction and checks whether this ray "hits", in other worl collide, with a 3d object in the scene. In many 3D physics game engines, this done as a search in an internal database where the engine keeps information of all colliders in the scene, arranged so that spatial searches may be done quickly. The ray is first tested against the bounding box of each collider; when it's found that a bounding box is hit by the ray, the test is done against the actual collider shape. Spherical, capsule and box colliders are tested with relatively simple operations.

### Brief Description of the Drawings

Various embodiments in accordance with the present disclosure will be described with reference to the drawings, in which:
Figure 1 depicts an example implementation of the proposed method, where a building is recognized by a mobile device;
Figures 2 depicts a simple method to position virtual objects in a 3d scene by using a map.
Figure 3 depicts an illustrative example of a system or architecture in which the method for providing object recognition may be implemented;
Figure 4, 5 and 6 depict some example data flow that may be implemented using the described architecture in accordance with at least some embodiments;
Figure 7 depicts an example of a mobile and computing system environment in which various embodiments of the method can be implemented.

### Detailed Description

In the following description, various embodiments will be described. For purposes of explanation, specific configurations and details are set forth in order to provide a thorough understanding of the embodiments. However, it will also be apparent that the embodiments may be practiced without the specific details. Furthermore, well-known features may be omitted or simplified in order not to obscure the general idea.

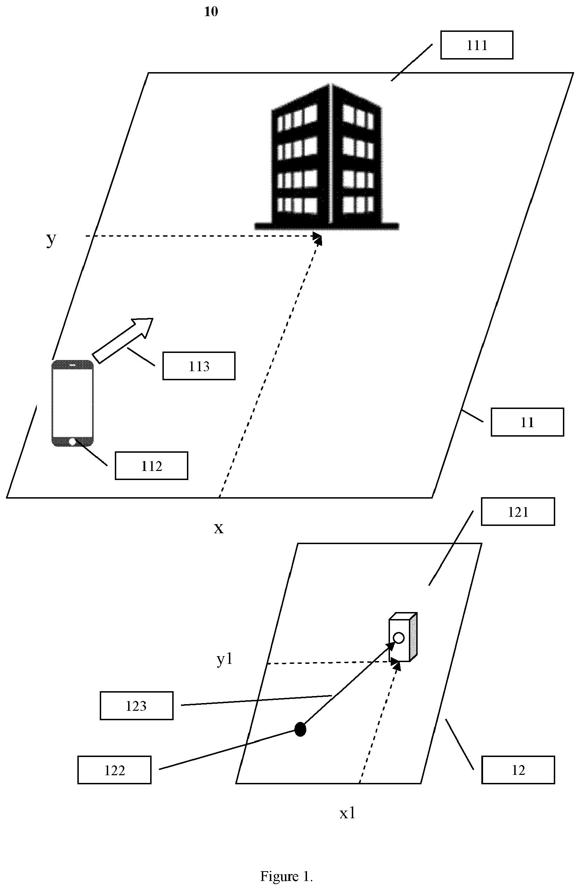

Figure 1 illustrates a snapshot of an example scenario referring to the use in an urban environment as for example in a guided tour system, where we want to identify specific buildings in order to provide the user with relevant information.

In this particular embodiment 11 represents the real-world scene, an urban area and 111 is a building in this area. The mobile device 112 is moving within the specific area and the orientation of the device is represented by arrow 113.

12 represents the digital scaled 3d model of the specific area and the building in represented by the 3d cuboid shape 121. Scaled mean that if for example, the real word area 11 is 1 square kilometer the 3d model reconstruction 12 could be 100 arbitrary square units. In accordance, if the building 111 resides 500m north and 500east from the area's reference point, the virtual representation 121 will be placed in the position xl=50 arbitrary units yl=50arbitraty units.

The position of the mobile device 112 in real word is represented by a point, the virtual mobile device 122 in the 3d model and is moving according to the movement of the mobile device in real word. If for example the mobile device moves north 100m, the virtual device moves 10 arbitrary units towards the y axis. This is done by transferring the GPS sensor indication of the mobile device in the 3d model reconstruction.

Whenever the direction 112 of the mobile device changes, a raycast 122 is occurs in the 3d space following the same direction and rotation of the mobile device. This is done by transferring the compass, gyroscope and accelerometer sensor information from the real scene to the virtual one.

A raycast 112 is essentially, a ray that gets sent out from a position in 3D or moves in a specific direction 113. When the ray hits the model 121, in other word the collider of the specific virtual building, the actual building 111 is recognized and relevant information is transferred to the mobile device which accordingly presents the user with the information related to building 111.

The same process, from the point of view of the mobile device user in the actual scene 1 1means that when the camera of mobile device 112 is directed towards the building 111 and the user sees the building through the device display the raycast from the mobile device hits the virtual representation 121 and identifies it, returning the information to the mobile device with all the relevant multimedia information and the distance.

As described, the problem of recognizing the building in the real word is being transferred to recognizing the representation of the building in a scaled 3d model. Not any kind of tagging or image capturing of the actual building .

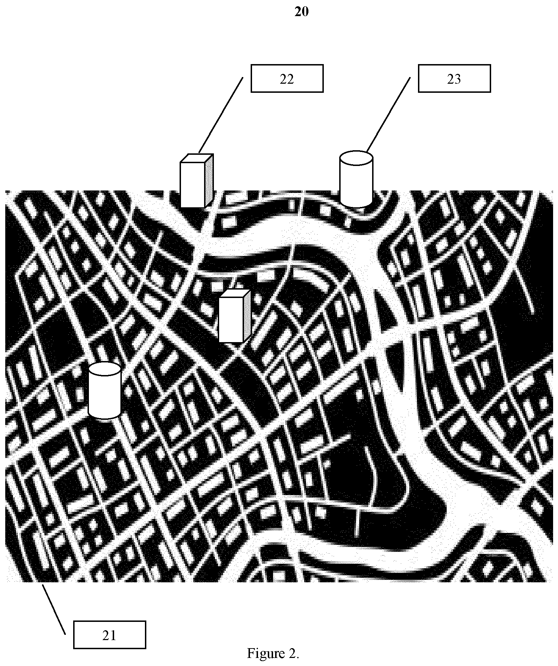

Furthermore, the virtual building could me positioned to the 3d model with the use of a simple map or a digital satellite image as long as the address is known, as depicted in Figure 2. A scaled map image 21 is superimposed on the 3d environment and the virtual buildings 22 and 23 are positioned according to the addresses of the real word buildings that they represent.

The location of the virtual building 121 relative to the virtual mobile device 122 may be used to simulate depth perception cues for the presentation of the multimedia information in the mobile device display. Lets assume that the multimedia material presented in the AR application is a 3d reconstruction of the building 111 as it was in another historical period. The AR application may geometrically adjust the appearance of the 3d building reconstruction as it appears on the user's two-dimensional display. For example, when the location the virtual building is far ahead of the current location 122, the depth of the 3d building reconstruction in the field of view of the device 112 is deeper. The size of the presented information may be scaled with respect to the depth, such that may appear smaller in the field of view.

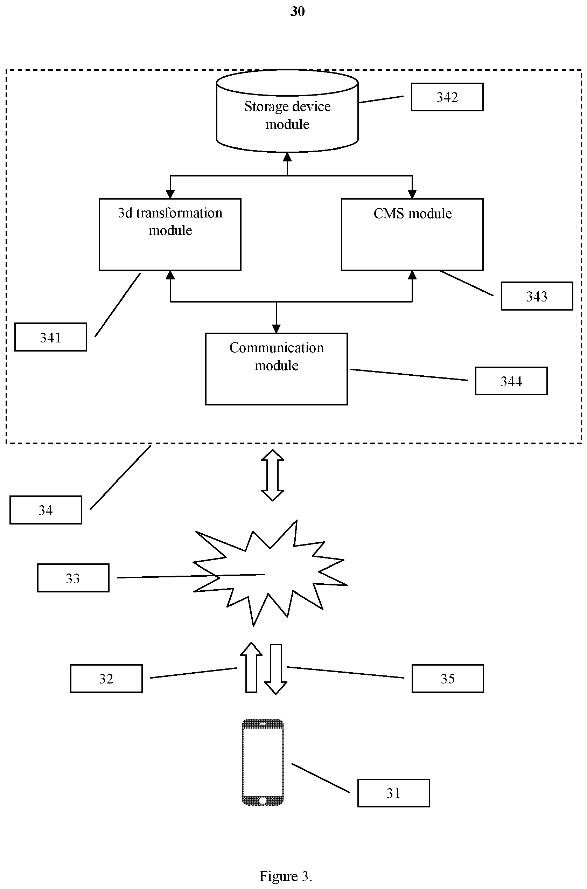

A system that could embody the previous mention scenario is shown in Figure 3.

The mobile device 31 is posting the information 32 concerning its position and rotation, as registered from the various mobile device sensors through the communication network 33 to the computing system 34.

The information is received from the communication module 344 and transferred to the 3d transformation module 341 that manages the information of the 3d scaled scenes. The transformation module 341 translates the information to the digital model and recognizes the virtual objects. The information of the virtual objects as well as the multimedia material concerning the real word objects are managed through the storage device module 372.

The content management module 343 can be a combination of hardware and software configured to carry out aspects of the present invention. In some embodiments, the content management system 343 can include a computing system with specialized software and databases designed for providing a method for creating, transforming, storing, and/or delivering AR content or a combination thereof. For example, the content management system 343 can be software installed on a cloud based computing device including a web based interface which is accessible by computing devices . As would be appreciated by one skilled in the art, the cloud content management system 343 can include a single computing device, a collection of computing devices in a network computing system, a cloud computing infrastructure, or a combination thereof.

In some embodiments, the cloud content management system 343 can include a storage device 372. The storage device 372 can include any combination of computing devices configured to store and organize a collection of data. For example, storage device 372 can be a local storage device on the content management system 343, a remote database facility, or a cloud computing storage environment. The storage device 372 can also include a database management system utilizing one or more database models configured to interact with a user for accessing and modifying AR content.

Continuing with Figure 3, the computing system can include a combination of core components to carry out the various functions of the present invention. In some embodiments, the content management system 343 can include, at least, a user interface (UI) module a transformation module and a delivery module to provide the functionality of the present invention. As would be appreciated by one skilled in the art, the modules 341, 372, 343 can include any combination of hardware and software configured to carry out the various aspects of the present invention. In particular, each of the modules are configured to provide users with a system to create, store, and receive portable AR content.

As would be appreciated by one skilled in the art, the communications module 344 can include any combination of known networks. For example, the communications network 344 may be combination of a mobile network, WAN, LAN, or other type of network. The communications network 344 can be used to exchange data between the computing devices 34 , exchange data with the storage device 372, and/or to collect data from additional sources.

In accordance with an example embodiment of the present invention, the CMS module 343 is configured to provide a mechanism for content providers to create and customize AR content to be displayed to content consumers. In some embodiments, the CMS module 343 can be configured to provide a web portal interface for content providers to login to the to upload and customize their AR content. The CMS module 343 can provide any combination of interfaces to access to the system 34. For example, the CMS module 343 can provide a webpage, an application program interface (API), a mobile application interface, or any combination thereof.

In some embodiments, the CMS module 343 can be configured to receive and store a combination of content and data from content provider device . For example, the CMS module 343 can be configured to receive uploaded AR content source files (e.g., 2D AR content, 3 AR content, or other multimedia) and data to be associated with those files. The AR content source files can be received using any combination of formats known in the art. For example, the AR content can be 3D AR content received in a .fbx, .dae, .3ds, .dxf, .obj, .skp, .usdz, etc. file format. In some embodiments, depending on the AR content source, additional files to be associated with the AR content can be uploaded to the system 34 and stored in association with the AR content. For example, if textures are not embedded within the uploaded AR source content, because the AR files reference external texture files, object textures can be uploaded for use with the AR content. In another example, some file formats can support textures that are embedded within that file, such that the textures are referenced within the file itself. The present invention can be modified to accept all combinations of file formats known in the art.

In some embodiments, data to be associated with the AR content can be received by the CMS module 343 through any combination of methods known in the art. For example, data or metadata can be received from user Tillable input controls within a graphical interface provided by the UI module 110, the input controls including but not limited to, checkboxes, radio buttons, dropdown lists, list boxes, buttons, toggles, text fields, date field. Once input data is received, In some embodiments, data to be associated with the AR content can be received by the CMS module 343 through any combination of methods known in the art. For example, data or metadata can be received from user input controls within a graphical interface provided by the CMS module 343, the input controls including but not limited to, checkboxes, radio buttons, dropdown lists, list boxes, buttons, toggles, text fields, date field. Once input data is received, the CMS module 343 can associate the data with the uploaded AR source content can associate the data with the uploaded AR source content. The input data can be used by the system 34 to determine how the AR content should be formatted and/or displayed. For example, the input data can specify how the content is to be triggered (e.g., response to a marker, geolocation, etc.) to be displayed, when it can be displayed (e.g., specified time period, geolocation, etc.), where it can be displayed (e.g., geolocation, area size, etc.), what devices can display the content (e.g., smartphone, headsets, etc.) and any other combination of rules that the user can specify (e.g., specific users at predetermined points in time at specific locations). In some embodiments, the data can specify parameters for how the AR content itself is displayed. For example, the data can specify an orientation, position, size, etc. of the AR content. Overall, the CMS module 343 can be configured to receive any data receivable from content providers and stored within the database structure of the storage device 372.

As a result, the transformation module 341 can transform AR content that is only viewable by a source application to a format that can be downloaded rendered across any platform running one of the variants at runtime. In other words, the transformed AR content becomes portable content that is formatted in a state that is efficiently renderable by any requesting device because the transformed AR content is provided in a format that is native and optimized for the requesting client rendering technology (e.g., iOS, Android, Windows, etc. Operating Systems). For example, if a device is operating iOS, the device will receive AR content that is formatted for rending and displaying within iOS such that once downloaded, the device merely needs to render and display the AR content without any additional formatting. Such functionality enables the system 102 to provide new AR content to a AR display application without having to update, modify, compile, or redeploy the AR display application.

After transformation, the one or more AR packages can be stored for later retrieval by the communication 344. For example, the one or more AR packages can be stored in any database known in the art (e.g., SQL, CDN blob storage, etc.). The one or more AR packages and the data related thereto can be stored in multiple databases for fast retrieval and delivery to requesting devices. For example, one or more AR packages can be automatically replicated to multiple data centers over multiple geographic areas for distribution to users in those areas. The CDN technology can dynamically replicate this storage to other locations around the planet as the demand for the content increases. By moving this content to different locations on the planet, the content will be physically closer to the consumers to make it faster to download and more reliable experience. In some embodiments, the AR packages can be stored structured data stores to allow content to be queried for fast access and dynamic delivery while the application on the user device is running to be rendered in real-time. For example, the one or more AR packages can be stored in structured SQL-based storage for configuration (e.g., transformation) and data or metadata associated with the one or more AR packages can be stored in separate unstructured data stores (e.g., NoSQL, blob storage, etc.) for distribution (e.g., delivery), In some embodiments, some of the parameters and other metadata associated with the AR package can be stored together in the database. For example, AR packages can include the transformed AR content in a displayable format for a particular device as well as rules and/or an optional marker associated with the AR content that trigger display of that AR content.

In some embodiments, the communication module 344 can analyze requests to determine whether and/or what AR content should be delivered based on information received from the requesting device. AR content can be configured for display at certain locations or in response to capturing a particular, visual, audio, geolocation, or motion based cue and the communication module can determine whether those criteria have been satisfied prior to delivery. For example, communication module 344 can analyze a geolocation of the requesting device or an image received from a content consumer device 31 to determine whether there is a marker or recognizable surface present in the image that will trigger any AR content, based on the data or metadata associated with AR content in the storage device 372. In response to a valid request (e.g., criteria for some AR content is met), the communication module 344 can be configured to identify the operating system of the requesting device (e.g., via metadata transmitted by the requesting device) and transmit the appropriate AR package to the device for display.

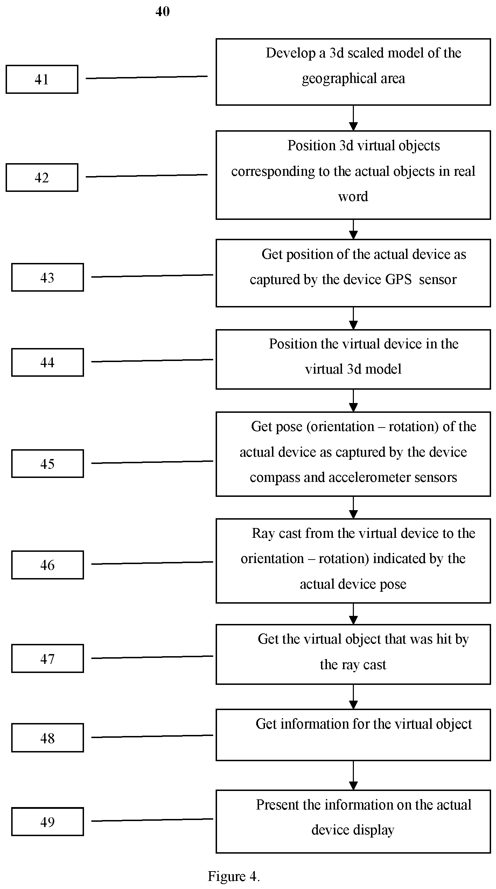

Figure 4 presents the process and information flow in the system described in the development.

In step 41 a scaled 3d model of the geographical area we want is developed in with the software, a virtual scene, with a suitable 3d software.

In step 72 we position and rotate the virtual objects, corresponding to the actual objects in the virtual scene. The positioning of the objects could be done by mapping with the help of map or a satellite image. The virtual objects could be simplified like cylinders or cuboids with proportional to the actual object dimensions.

In step 43, as the mobile device is moving within the actual real word scene we get the information from the GPS sensor and accordingly move, in step 44, a virtual device within the virtual 3d scene.

In step 45 we get information concerning the orientation and rotation from the available combination of compass, gyroscope and accelerometer sensors

We use the orientation information in step 46 where to raycast from the virtual device in the same direction. In case that the raycast hits a collider that corresponds to any of the virtual objects we get the object identification and get multimedia information concerning the above object

In final step 49 we present the information with the suitable manner in the mobile device display.

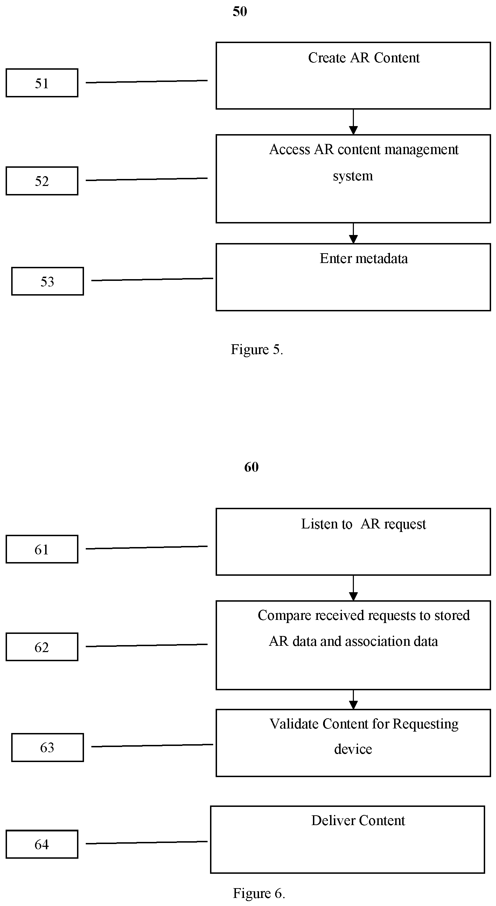

Figure 5 show exemplary flow charts for implementing the system 30 of the present invention. At step 51 a content creator can create AR content that is designed to be provided to content consumers. The AR content can include any combination of two-dimensional (2D) or three-dimensional (3D) AR content and can be created using any combination of software known in the art. The AR content can be saved utilizing the proprietary format utilized by the software utilized to create said AR content, the proprietary format being the format that the utilized software saves the created AR content. As would be appreciated by one skilled in the art, the present invention can be utilized with any combination of multimedia and is not limited to use with AR content. For example, the present invention can be used with all types of augmented reality, such as virtual reality, and other audio and visual mediums.

At step 52 the content creator can access the AR content management module 343 associated with the present invention. The content creator can access the system 32 through any combination of methods or systems known in the art. For example, the content creator can access the system 32 by logging into a webpage, through a web portal, through a desktop or mobile application, using an API, or a combination thereof.

At step 53, once accessing the system 34, the content creator can upload the created AR content, in its proprietary format, to the cloud content management system 102 through any means known in the art. When applicable, the content creator can also upload other files to be associated with the AR content. For example, the content creator can upload textures to be applied to the AR content. Previously to or after uploading the AR content, the content creator can add additional information, parameters, etc. to be associated with the uploaded AR content. For example, the content creator can add information related to how, when, where the AR content is to be displayed. Once all information has been entered and all files have been uploaded, the content creator can save the inputs and the AR content will be managed by the system 34.

Referring to figure 6, depicts an exemplary process 60 showing an example operation of the present invention from the perspective of a content consumer device 31, as discussed with respect to Figures. 1 and 2. In particular, Figure. 6 shows an example operation for the content consumer device 31 requesting and receiving AR content for rendering and display to a user. In some embodiments, the content consumer device 31 can include a rendering application associated with the system 32 of the present invention or a third-party application configured to receive AR content from the system 32. The application on the content consumer device 31 can be configured to handle the operations provided in process 60. In some embodiments, the system 32 can deny the content consumer device 31 permission from displaying AR content. For example, the application can reference the metadata associated with AR content and can determine whether the displaying device is in the right GPS position (as defined in the metadata), whether other content should be activated near other content with other content (e.g., competitors), etc.

At step 62 the content consumer device 31 can capture location data and/or an image or video of a real-world environment. For example, the content consumer device 31 can us a combination of a global positioning system, a camera, and any other combination of data capturing means to capture information about the real-world environment at the user's current location.

At step 63 the content consumer device 31 can receive a response back from the system 32 including AR content associated with the provided real-world information. The received AR content can already be formatted for rendering and display in a format native to the content consumer device 31 such that it can be displayed on the fly without having to recompile or redeploy the application displaying the AR content on the content consumer device 31. In instances where the system 32 determines that there is no AR content associated with the received request (e.g., the request failed validation), or that the display of the AR content is not appropriate at that time, the response can include an indication that there is no AR content available for the provided real-world information.

At step 64 the content consumer device 31 can render and display the AR content to the user, based on how the AR package(s) is being activated. For example, for location-based AR, the system can use world mapping capabilities to anchor the AR object to a horizontal surface so a user can move around the object in 3D space and it feels there.

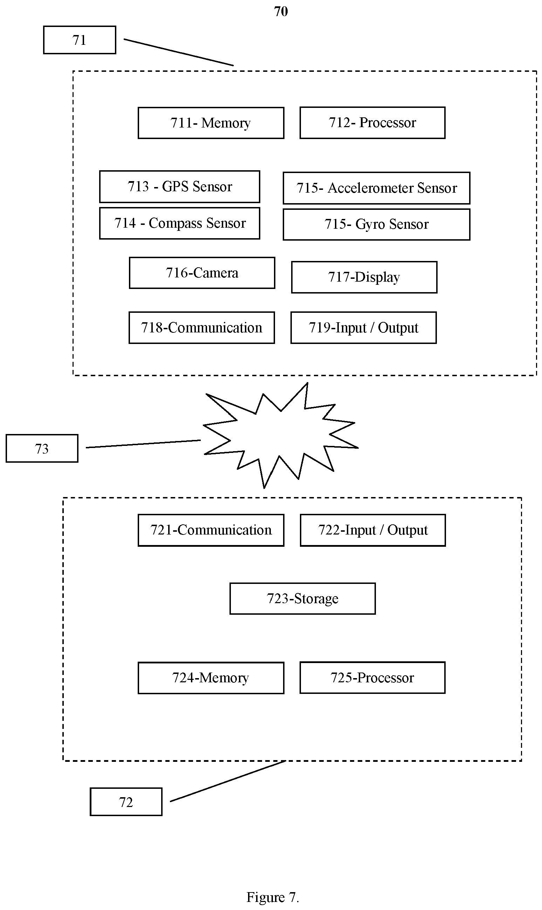

Figure 7 is a block diagram illustrating a system that may be used to run, implement and/or execute any of the methods and techniques shown and described herein in accordance with some embodiments of the present invention. The system includes user devices 71 a communicating system 73 and a computing system 72.

The user device 71 may be any portable user devices such as a Smartphone, a tablet computer, mobile computer or device, pad-like device, a head-mounted display, and/or a wearable device. The user device 71 may include a processor 712, a memory 711 , a camera 716, a display 717, one or more other input/output devices 719 and a Communication device 718.

It also include any combination of position and rotation sensors, like GPS 713, Accelerometer 715, Gyroscope 715 and Compass 714.

The processor 712 is configured to execute computer readable instructions stored in the memory 711 to facilitate one of more steps of the methods described with reference to figures 1 to 6. The memory 711 may include RAM and/or a hard drive memory device. The communication interface 318 is configured to transmit and receive data to and from the mobile device 71 through the network 73. The camera 716 may be any image capture device. The display 717 may be a liquid crystal display (LCD), a light-emitting diode (LED) display, an organic light emitting diode (OLED) display, a liquidcrystal on silicon (LCoS) display, a LED illuminated display, and the like. In some embodiments, the display 717 is a touch display that is configured to receive input from the user. In some embodiments, the display 717 is a head-mounted display that projects images to a lens or into the wear's eyes. The display may be used to display variously user interfaces described with reference to figures 1 to 6 above.. The user device 71 may further include other input/output devices 719 such as a microphone, a speaker, a tilt sensor, a compass, a USB port, a secondary camera, a graphic processor, etc. The input/output devices 719 may be used to enter and playback content items. In some embodiments, the tilt sensor and the compass are used by the system to better position the computer generated graphics over the image of the real-world scene, in addition image recognition.

The computer system 72, in particular embodiments, can perform one or more steps of one or more methods described or illustrated herein. In particular embodiments, one or more computer systems 72 provide functionality described or illustrated herein. In particular embodiments, software running on one or more computer systems 72 performs one or more steps of one or more methods described or illustrated herein or provides functionality described or illustrated herein. Particular embodiments include one or more portions of one or more computer systems 72. Herein, reference to a computer system may encompass a computing device, and vice versa, where appropriate. Moreover, reference to a computer system may encompass one or more computer systems, where appropriate.

This disclosure contemplates any suitable number of computer systems 72. This disclosure contemplates computer system 72 taking any suitable physical form. As example and not by way of limitation, computer system 72 may be an embedded computer system, a system-on-chip (SOC), a single-board computer system (SBC) (such as, for example, a computer-on-module (COM) or system-onmodule (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 72 may include one or more computer systems 72; be unitary or distributed; span multiple locations; span multiple machines; span multiple data centers; or reside in a cloud, which may include one or more cloud components in one or more networks. Where appropriate, one or more computer systems 72 may perform without substantial spatial or temporal limitation one or more steps of one or more methods described or illustrated herein. As an example and not by way of limitation, one or more computer systems 72 may perform in real time or in batch mode one or more steps of one or more methods described or illustrated herein. One or more computer systems 72 may perform at different times or at different locations one or more steps of one or more methods described or illustrated herein, where appropriate.

In particular embodiments, computer system 72 includes a processor 725, memory 724, storage 723, an input/output (I/O) interface 722, a communication 721. Although this disclosure describes and illustrates a particular computer system having a particular number of particular components in a particular arrangement, this disclosure contemplates any suitable computer system having any suitable number of any suitable components in any suitable arrangement.

In particular embodiments, processor 725 includes hardware for executing instructions, such as those making up a computer program. As an example and not by way of limitation, to execute instructions, processor 725 may retrieve (or fetch) the instructions from an internal register, an internal cache, memory 724, or storage 723; decode and execute them; and then write one or more results to an internal register, an internal cache, memory 724, or storage 723. In particular embodiments, processor 725 may include one or more internal caches for data, instructions, or addresses. This disclosure contemplates processor 725 including any suitable number of any suitable internal caches, where appropriate. As an example and not by way of limitation, processor 725 may include one or more instruction caches, one or more data caches, and one or more translation lookaside buffers (TLBs). Instructions in the instruction caches may be copies of instructions in memory 724 or storage 723, and the instruction caches may speed up retrieval of those instructions by processor 725. Data in the data caches may be copies of data in memory 724 or storage 723 for instructions executing at processor 725 to operate on; the results of previous instructions executed at processor 725 for access by subsequent instructions executing at processor 725 or for writing to memory 724 or storage 723; or other suitable data. The data caches may speed up read or write operations by processor 602.

In particular embodiments, memory 724 includes main memory for storing instructions for processor 725 to execute or data for processor 725 to operate on. As an example and not by way of limitation, computer system 72 may load instructions from storage 723 or another source (such as, for example, another computer system 72) to memory 724. Processor 725may then load the instructions from memory 724 to an internal register or internal cache. To execute the instructions, processor 725 may retrieve the instructions from the internal register or internal cache and decode them. During or after execution of the instructions, processor 725 may write one or more results (which may be intermediate or final results) to the internal register or internal cache. Processor 725may then write one or more of those results to memory 724. In particular embodiments, processor 725executes only instructions in one or more internal registers or internal caches or in memory 604 (as opposed to storage 723 or elsewhere) and operates only on data in one or more internal registers or internal caches or in memory 604 (as opposed to storage 723 or elsewhere). One or more memory buses (which may each include an address bus and a data bus) may couple processor 725 to memory 724.

In particular embodiments, memory 724 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 604 may include one or more memories 724, where appropriate. Although this disclosure describes and illustrates particular memory, this disclosure contemplates any suitable memory.

In particular embodiments, storage 723 includes mass storage for data or instructions. As an example and not by way of limitation, storage 723 may include a hard disk drive (HDD), a floppy disk drive, flash memory, an optical disc, a magneto-optical disc, magnetic tape, or a Universal Serial Bus (USB) drive or a combination of two or more of these. Storage 723 may include removable or non-remov¬able (or fixed) media, where appropriate. Storage 723 may be internal or external to computer system 600, where appropriate. In particular embodiments, storage 723 is nonvolatile, solid-state memory. In particular embodiments, storage 723 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 723 taking any suitable physical form. Storage 723 may include one or more storage control units facilitating communication between processor 725and storage 606, where appropriate. Where appropriate, storage 723 may include one or more storages 606. Although this disclosure describes and illustrates particular storage, this disclosure contemplates any suitable storage.

In particular embodiments, I/O interface 722 includes hardware, software, or both, providing one or more interfaces for communication between computer system 72 and one or more I/O devices. Computer system 72 may include one or more of these I/O devices, where appropriate. One or more of these I/O devices may enable communication between a person and computer system 72. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 608 for them. Where appropriate, I/O interface 722 may include one or more device or software drivers enabling processor 725 to drive one or more of these I/O devices. I/O interface 722 may include one or more I/O interfaces 722, where appropriate. Although this disclosure describes and illustrates a particular I/O interface, this disclosure contemplates any suitable I/O interface.

In particular embodiments, communication interface 721 includes hardware, software, or both providing one or more interfaces for communication (such as, for example, packet-based communication) between computer system 72 and one or more other computer systems 72 or one or more networks. As an example and not by way of limitation, communication interface 721 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 721 for it. As an example and not by way of limitation, computer system 600 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 72 may include any suitable communication interface 721 for any of these networks, where appropriate. Communication interface 721 may include one or more communication interfaces 721, where appropriate. Although this disclosure describes and illustrates a particular communication inter-face, this disclosure contemplates any suitable communication interface.

Herein, a computer-readable non-transitory storage medium 723 or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

## Claims

1. A method comprising by a computing system:
Recognizing real word objects by the representation of virtual objects in a scaled 3d scene Delivering relevant to the recognized object multimedia content to the user

2. A system comprising by a mobile device and a computer system which:
Recognize real word objects by the representation of virtual objects in a scaled 3d scene Delivers relevant to the recognized object multimedia content to the user

3. One or more computer readable storage media embodying software that is operable when executed and could:
Recognize real word objects by the representation of virtual objects in a scaled 3d scene
Delivers content according to the position of the real word object to the user
